# FASCICULE DE BREVET EUROPEEN

(11) **EP 4 650 972 B1**
(45) Date de publication et mention de la délivrance du brevet: **08.07.2026**
(21) Numéro de dépôt: 25175906.4
(22) Date de dépôt: 13.05.2025
(51) Int. Cl.: G06F 12/0864, G06F 17/16, G06F 12/0846

(54) **DISPOSITIF DE CALCUL INFORMATIQUE A MEMOIRE CACHE OPTIMISEE POUR LE CALCUL MATRICIEL**
COMPUTER-RECHNERVORRICHTUNG MIT OPTIMIERTEM CACHE ZUR MATRIXBERECHNUNG
COMPUTER COMPUTING DEVICE WITH CACHE MEMORY OPTIMIZED FOR MATRIX CALCULATION

(30) Priorité: 17.05.2024 FR 2405054
(43) Date de publication de la demande: 19.11.2025
(73) Titulaire: Commissariat à l'Energie Atomique et aux Energies Alternatives, 75015 Paris (FR)
(72) Inventeur: ISAAC-CHASSANDE, Valentin, 38054 GRENOBLE CEDEX 09 (FR); EVANS, Adrian, 38054 GRENOBLE CEDEX 09 (FR); DURAND, Yves, 38054 GRENOBLE CEDEX 9 (FR)
(74) Mandataire: Cabinet Beaumont

(56) Documents cités:
- US-A1- 2006 020 756
- SRIKANTH SRISESHAN SESHU6392@GMAIL COM ET AL: "SortCache", ACM TRANSACTIONS ON ARCHITECTURE AND CODE OPTIMIZATION, ASSOCIATION FOR COMPUTING MACHINERY, US, vol. 18, no. 4, 3 September 2021 (2021-09-03), pages 1 - 24, XP058627761, ISSN: 1544-3566, DOI: 10.1145/3473332
- ZHU GANGYI ET AL: "A Performance Prediction Framework for Irregular Applications", 2018 IEEE 25TH INTERNATIONAL CONFERENCE ON HIGH PERFORMANCE COMPUTING (HIPC), IEEE, 17 December 2018 (2018-12-17), pages 304 - 313, XP033516431, DOI: 10.1109/HIPC.2018.00042

## Description

### Domaine technique

La présente description concerne de façon générale le domaine des dispositifs de calculs informatiques, ou calculateurs, utilisés notamment pour la mise en œuvre de calculs matriciels.

### Technique antérieure

De nombreux calculs haute performance (HPC) impliquent la mise en œuvre de calculs matriciels, comme par exemple la résolution de systèmes d'équations différentielles partielles ou de graphes sémantiques. Il est fréquent que les matrices faisant l'objet de ces calculs correspondent à des matrices creuses, également appelées matrices peu denses ou éparses, comportant un nombre important de valeurs nulles, ou de zéros, par rapport au nombre total de valeurs. Ces calculs peuvent impliquer notamment l'exécution d'algorithmes de multiplication d'une matrice creuse *A* avec un vecteur *b* (opération appelée « SpMV ») qui correspondent à un calcul d'un vecteur de sortie *c* = *A.b.* Or, il est pertinent d'optimiser les dispositifs réalisant des calculs avec de telles matrices, en particulier lorsqu'il s'agit de matrices de très grandes tailles comprenant par exemple des millions de valeurs non nulles.

Il existe des formats de stockage pour les matrices creuses qui évitent de stocker tous les zéros de ces matrices. Ces formats correspondent par exemple au format CSR (« Compressed Sparse Row » en anglais) ou CSC (« Compressed Sparse Column »). Ces formats permettent de réduire la taille de la mémoire nécessaire à leur stockage. Mais en contrepartie, ils nécessitent de parcourir des tables qui contiennent des indices, c'est-à-dire les emplacements, des valeurs non-nulles. Or, les systèmes de mémoires et de caches (ou mémoires caches) utilisés dans les calculateurs classiques ne sont pas bien adaptés pour traiter les séquences d'accès mémoires irrégulières qui découlent du traitement des données éparses des matrices creuses.

Il existe différentes façons de réaliser un calcul de type SpMV, comme par exemple les algorithmes de calcul de produit intérieur (« inner-product ») ou de calcul de produit extérieur (« outer-product »). Les algorithmes de type « outer-product » nécessitent moins d'accès mémoires que ceux de type « inner-product », mais ils sont moins utilisés car ils impliquent que le vecteur de sortie *c* soit mis à jour tel que *cᵢ = cᵢ+A_{i,j}*bⱼ,* avec *cᵢ* correspondant aux valeurs du vecteur de sortie *c*, *A_{i,j}* correspondant aux valeurs de la matrice creuse *A*, et *bⱼ* correspondant aux valeurs du vecteur d'entrée *b.* Ces mises à jour des valeurs du vecteur de sortie *c* impliquent des accès mémoires irréguliers car les positions de ces valeurs dépendent de celles des valeurs non-nulles dans la matrice creuse *A.* Ces mises à jour des valeurs du vecteur de sortie c sont appelées « réductions » et consistent en l'ajout d'un produit partiel (*A_{i,j}*bⱼ*) à la valeur précédente du vecteur *c.* Ces réductions réalisées à des adresses non régulières provoquent beaucoup de trafic de données vers la mémoire principale, ou mémoire externe, et pour cette raison, les algorithmes de type « inner-product » sont par défaut les plus utilisés.

Il est à noter qu'une matrice peut être décomposée en plusieurs régions, et que chaque région d'une matrice peut être traitée de manière indépendante. Il est donc possible, lors de l'évaluation d'une matrice de grande taille, de faire coexister des algorithmes de type « inner-product » et « outer-product ».

Dans beaucoup de domaines applicatifs tels que celui de la résolution d'équations différentielles, les matrices creuses qui sont traitées ont très souvent des éléments non nuls localisés de manière relativement dense autour de la diagonale de la matrice, cette répartition des éléments non nuls devenant éparse autour de la diagonale de la matrice. En outre, les matrices creuses qui n'ont pas cette structure dite « en bande », dans laquelle les valeurs non nulles sont majoritairement localisées dans la région de la diagonale de la matrice, peuvent être transformées en matrice comprenant une diagonale dense en valeurs non nulles, avec un coût de calcul raisonnable.

Le document US 2018/189239 A1 décrit une architecture d'accélération matérielle pour la mise en œuvre de calculs sur des matrices creuses. Dans cette architecture, la matrice faisant l'objet d'opérations peut être décomposée en deux régions, l'une de ces régions étant plus dense en valeurs non nulles que celles de l'autre région. Ces deux régions sont traitées par des unités de calcul et des mémoires distinctes. Dans cette architecture, le système est hautement parallélisé avec une séparation physique des transferts entre les données creuses et les données très creuses. En outre, la décomposition de la matrice pour les différentes régions nécessite un prétraitement de celle-ci.

Le document US 2006/020756 A1 décrit une interface mémoire contextuelle pour processeur de réseau.

### Résumé de l'invention

Il existe un besoin de proposer un dispositif de calcul informatique optimisé pour la mise en œuvre d'algorithmes de calcul de produit extérieur (« outer-product ») avec un nombre réduit d'accès à la mémoire principale, ou mémoire extérieure, du dispositif.

Un mode de réalisation pallie tout ou partie des inconvénients des solutions existantes et propose un dispositif de calcul informatique tel que défini dans les revendications 1 à 15.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
- la figure 1 représente schématiquement un dispositif de calcul informatique selon un premier mode de réalisation ;
- la figure 2 représente schématiquement une association réalisée entre différentes régions d'une matrice creuse utilisée dans un calcul mis en œuvre par le dispositif de calcul informatique et différentes régions de la mémoire cache du dispositif de calcul informatique ;
- la figure 3 représente des exemples d'opérations de réduction réalisées séquentiellement dans une première région mémoire d'une mémoire cache du dispositif de calcul informatique ;
- la figure 4 représente des exemples d'opérations de réduction réalisées séquentiellement dans une deuxième région mémoire d'une mémoire cache du dispositif de calcul informatique ;
- la figure 5 représente schématiquement un dispositif de calcul informatique selon un deuxième mode de réalisation ;
- la figure 6 représente schématiquement un dispositif de calcul informatique selon un troisième mode de réalisation ;
- la figure 7 représente schématiquement un exemple de matrice creuse utilisée dans un calcul mis en œuvre par le dispositif de calcul informatique selon le troisième mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, différents éléments (processeur, mémoire principale, mémoire cache, contrôleur mémoire, bus de transmission de données, etc.) du dispositif de calcul informatique ne sont pas détaillés. L'homme du métier sera à même de réaliser de manière détaillée ces éléments à partir de la description fonctionnelle donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures dans une position normale d'utilisation.

Sauf précision contraire, les expressions "environ", "approximativement", "sensiblement", et "de l'ordre de" signifient à 10 %, de préférence à 5 %.

Dans tout le document, le terme « vecteur » est utilisé pour désigner une matrice ligne ou une matrice colonne.

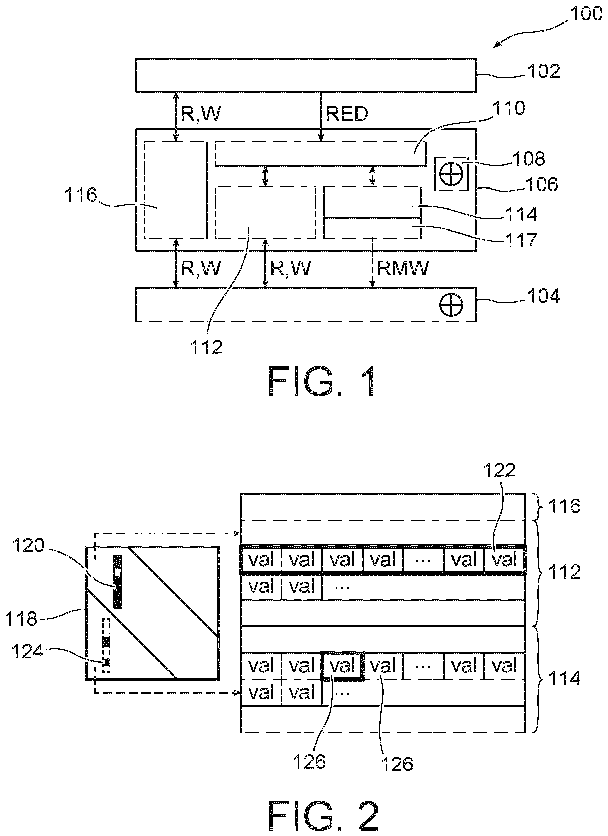

Un exemple de dispositif de calcul informatique 100 selon un premier mode de réalisation est décrit ci-dessous en lien avec la figure 1. Dans l'exemple décrit, le dispositif 100 est configuré pour mettre en œuvre des algorithmes de multiplication d'une matrice creuse *A* avec un vecteur d'entrée *b* (opération SpMV calculant le vecteur de sortie *c* = *A.b*). Selon un exemple de réalisation, les données calculées peuvent être des nombres en virgules flottantes, typiquement stockés en format double, et l'opération mise en œuvre pour les réductions par la mémoire cache 106 peut correspondre à une addition. En variante ou de manière complémentaire, le dispositif 100 peut être configuré pour mettre en œuvre des opérations de type « SpMSpM » qui correspondent chacune à un calcul d'une matrice de sortie *C = A.B, A* et *B* correspondant à deux matrices creuses et qui peut être vu comme un enchaînement de plusieurs opérations SpMV consécutives.

Le dispositif 100 comporte une unité de calcul 102 qui correspond par exemple à un processeur ou tout autre circuit adapté à la mise en œuvre des algorithmes destinés à être exécutés.

Le dispositif 100 comporte également une mémoire principale, ou mémoire externe, 104, par exemple de type RAM (« Random Access Memory » en anglais, ou mémoire vive) et typiquement une DRAM (« Dynamic Random Access Memory » en anglais, ou mémoire vive dynamique). La matrice creuse *A* et le vecteur d'entrée *b* sont ici stockés dans la mémoire principale 104. La matrice creuse *A* peut être stockée dans un format adapté à la mise en œuvre d'un algorithme de calcul extérieur (« outer-product »), par exemple un format CSC.

Le dispositif 100 comporte également une mémoire cache 106 à laquelle sont couplées l'unité de calcul 102 et la mémoire principale 104. La mémoire cache 106 est configurée pour échanger des données avec l'unité de calcul 102 et avec la mémoire principale 104, et plus précisément avec un contrôleur mémoire de la mémoire principale 104.

La mémoire cache 106 comprend un circuit de calcul 108 configuré pour réaliser des opérations de réduction de type additive entre des produits partiels et des valeurs du vecteur de sortie *c.* Chacun des produits partiels correspond à une opération réalisée par l'unité de calcul 102 entre une des valeurs de la matrice creuse *A* et une des valeurs du vecteur d'entrée *b.* Par exemple, le circuit de calcul 108 peut réaliser une réduction correspondant à une addition entre une valeur *cᵢ* du vecteur de sortie c et un produit partiel *A_{i,j}*bⱼ* (*A_{i,j}* correspondant à l'une des valeurs de la matrice creuse *A* et *bⱼ* correspondant à l'une des valeurs du vecteur d'entrée *b*) telle que *cᵢ = cᵢ + A_{i,j}*bⱼ.* Par exemple, l'unité de calcul 108 peut correspondre à une unité arithmétique et logique, ou ALU (« Arithmetic Logic Unit » en anglais). Dans l'exemple de réalisation décrit, l'unité de calcul 108 est configurée pour mettre en œuvre des opérations de réduction sur des valeurs d'un vecteur de sortie c mémorisé dans la mémoire cache 106.

Sur l'exemple de la figure 1, la mémoire cache 106 comporte une interface 110 couplée à l'unité de calcul 102 et configurée pour recevoir les opérations, correspondant à des réductions dans l'exemple décrit, envoyées par l'unité de calcul 102 et destinées à être mises en œuvre par le circuit de calcul 108 de la mémoire cache 106.

La mémoire cache 106 comporte en outre au moins une première région mémoire 112 associative à N voies (« N-way set associative » en anglais) configurée pour mémoriser, avec une première granularité de mots T_{D}, des valeurs de résultats d'opérations de réduction réalisées par le circuit de calcul 108 à partir de produits partiels issus de, ou calculés à partir de, valeurs d'une région dense de la matrice creuse *A.* La mémoire cache 106 comporte également au moins une deuxième région 114 complètement associative (« fully associative » en anglais) ou associative à M voies (« M-way set associative » en anglais) configurée pour mémoriser, avec une deuxième granularité de mots T_{S}, des valeurs de résultats d'opérations de réduction réalisées par le circuit de calcul 108 à partir de produits partiels issus de, ou calculés à partir de, valeurs d'une région éparse de la matrice creuse *A,* avec M, N, T_{D} et T_{S} correspondant à des entiers tels que M ≥ N, T_{D} ≥ T_{S}, et également tels que M > N si T_{D} = T_{S} et tels que T_{D} > T_{S} si M = N.

Une région mémoire peut être considérée comme ayant une granularité de mots T si la taille de la plus petite transaction de la région mémoire avec une mémoire externe est de T mots. Par exemple, une mémoire cache ayant une granularité correspondant à une taille de ligne T = 8 peut effectuer des écritures et lectures de 8 mots minimum. La granularité peut être vue comme correspondant au nombre d'éléments consécutifs stockés en cache (ligne de cache).

La première région mémoire 112 de la mémoire cache 106 est optimisée pour traiter des opérations de réduction réalisées avec des produits partiels issus de valeurs de la région dense de la matrice creuse A et est organisée comme un cache associatif par ensemble (« set-associative » en anglais) dans lequel des lignes de cache complètes, par exemple de 64 octets (soit 8 valeurs, ou 8 mots, lorsque ces valeurs sont stockées dans un format double et que la première région mémoire 112 est associative à 4 voies), sont stockées à chaque écriture.

Selon un exemple de réalisation, la première région mémoire 112 peut être configurée pour mettre en œuvre, lors d'opérations de réduction réalisées par le circuit de calcul 108 à partir de produits partiels issus de valeurs d'une région dense de la matrice creuse *A,* les étapes suivantes :
- allocation d'une ligne de valeurs nulles de la première région mémoire 112 lors d'un accès à une adresse ne se trouvant pas encore dans la mémoire cache 106 ;
- écriture de résultats desdites opérations de réduction dans ladite ligne de la première région mémoire 112 ;
- lorsque ladite ligne de la première région mémoire 112 est sélectionnée pour être évincée, lecture de valeurs stockées dans la mémoire principale 104 et combinaison, dans ladite ligne de la première région mémoire 112, des valeurs lues dans la mémoire principale 104 avec celles écrites dans ladite ligne de la première région mémoire 112 ;
- éviction de ladite ligne de la première région mémoire 112, comprenant une écriture des valeurs de ladite ligne de la première région mémoire 112 dans la mémoire principale 104.

La mémoire cache 106 peut être configurée, dans le but d'éviter ou réduire les blocages dus aux évictions de lignes de la mémoire cache 106, pour anticiper les lectures de la mémoire principale 104, et ainsi équilibrer le trafic de données depuis et vers la mémoire principale 104 et éviter des situations bloquantes de trafic de données depuis / vers la mémoire principale 104. Des exemples de mise en œuvre de caractéristiques permettant ces anticipations sont décrits plus loin.

La deuxième région mémoire 114 de la mémoire cache 106 est optimisée pour traiter des opérations de réduction réalisées avec des produits partiels issus de valeurs des régions éparses de la matrice creuse *A* et est par exemple organisée comme un cache complètement associatif stockant individuellement une valeur (par un exemple au format double, c'est-à-dire 8 octets) à chaque écriture, et non des lignes de cache complètes comme le fait la première région mémoire 112. En effet, comme les données ne sont pas denses dans les régions éparses de la matrice creuse *A,* il n'est pas judicieux de gérer, en lecture et en écriture, des lignes de cache entières étant donné que la plupart des cases des lignes seraient vides (étant donné la présence majoritaire de valeurs nulles dans les régions éparses de la matrice creuse A). La gestion des données à une échelle plus petite que des lignes de cache entières est donc avantageuse lorsque des opérations de réduction sont mises en œuvre à partir de produits partiels issus de valeurs des régions éparses de la matrice creuse *A.* Un tel avantage se retrouve également lorsque la deuxième région mémoire 114 forme un cache associatif à M voies, avec M > N, c'est-à-dire dans laquelle la gestion des données est réalisée à l'échelle de lignes de cache plus petites que celles manipulées dans la première région mémoire 112, ou lorsque les deux régions mémoire 112, 114 sont configurés pour fonctionner avec des granularités de mots différentes.

Dans l'exemple de réalisation décrit, l'interface 110 est configurée pour recevoir les opérations de réduction à réaliser envoyées par l'unité de calcul 102 (symbolisées par l'expression « RED » sur la figure 1) et, selon la localisation des données concernées dans la matrice creuse *A* (région dense ou éparse), envoyer les données dans la première région mémoire 112 ou la deuxième région mémoire 114. La région de destination peut correspondre à un paramètre de chaque opération de réduction à réaliser.

Par exemple, en considérant *i* et *j* correspondant aux indices des lignes et colonnes de la matrice creuse *A,* et *B* correspondant à la largeur de bande de la région dense, cette région dense est celle pour laquelle les valeurs *A*_{*i*,*j*} sont telles que |*i-j*| *< B,* les autres valeurs appartenant à la région creuse de la matrice creuse *A.* La valeur de *B* peut être déterminée en fonction de la taille des lignes de cache de la première région mémoire 112, ou en fonction d'une différence de densité entre les régions denses et éparses de la matrice creuse *A.*

En outre, dans l'exemple de réalisation décrit, les échanges réalisés entre la première région mémoire 112 et la mémoire principale 104 correspondent à des opérations de lecture et d'écriture de lignes de caches entières (symbolisées par l'expression « R, W » sur la figure 1). De plus, les échanges réalisés entre la deuxième région mémoire 114 et la mémoire principale peuvent correspondre à des opérations atomiques de type « Read-Modify-Write », ou RMW.

Dans l'exemple de réalisation de la figure 1, la mémoire cache 106 comporte également une troisième région mémoire 116 de cache fonctionnant comme une mémoire cache standard, c'est-à-dire configurée pour mémoriser des données envoyées depuis la mémoire principale 104 et des opérations d'écriture provenant de l'unité de calcul 102. Cette troisième région mémoire 116 peut servir de cache lors des accès mémoires qui ne concernent pas le calcul du vecteur de sortie *c,* y compris la lecture de données de la matrice creuse *A* ou du vecteur d'entrée *b,* et ainsi réduire la latence d'accès depuis l'unité de calcul 102 à des données de la matrice creuse *A* ou du vecteur d'entrée *b* stockées dans la mémoire principale 104. La troisième région 116 peut fonctionner comme un cache associatif par ensemble dans lequel des lignes de cache complètes sont stockées à chaque écriture et lecture. Contrairement aux première et deuxième régions 112, 114, la troisième région 116 n'est pas configurée de manière à pouvoir mettre en œuvre des opérations de réduction sur le vecteur de sortie c. En outre, dans l'exemple de réalisation décrit, les échanges réalisés entre la troisième région mémoire 116 et la mémoire principale 104 peuvent correspondre à des opérations de lecture et d'écriture de lignes de caches entières.

Dans l'exemple de réalisation de la figure 1, la mémoire cache 106 comporte également une région mémoire FIFO 117 (« First In First Out » en anglais) configurée pour fonctionner avec la deuxième région mémoire 114 et la mémoire principale lors de la mise en œuvre des opérations atomiques RMW, les données correspondant à ces opérations étant temporairement stockées dans la région mémoire FIFO 117 pour éviter d'éventuels problèmes de congestion de la mémoire principale 104 et éviter des cas bloquants de la mémoire cache 106.

La figure 2 représente schématiquement l'association réalisée entre différentes régions de la matrice creuse *A* traitées dans un calcul et différentes régions de la mémoire cache 106. Sur cette figure, la matrice creuse *A* (représentée symboliquement) est désignée par la référence 118. La référence 120 désigne des données faisant partie de la région dense de la matrice creuse *A,* c'est-à-dire se trouvant dans la région de la diagonale de la matrice creuse *A,* et qui font l'objet d'une opération dont le résultat est écrit dans une ligne 122 de la première région mémoire 112. La référence 124 désigne des données faisant partie de la région éparse de la matrice creuse *A* et qui font l'objet d'une opération dont le résultat est écrit sous la forme de mots individuels 126 dans la deuxième région mémoire 114. Sur la figure 2, la valeur de chaque mot est représentée symboliquement par une case « val ». Sur l'exemple de la figure 2, la granularité de la première région mémoire 112 est d'une ligne de mots (entourée symboliquement en trait gras) et celle de la deuxièmes région mémoire 114 est d'un seul mot (entouré symboliquement en trait gras) .

La mémoire cache 106 est configurée pour stocker au moins une partie des valeurs du vecteur de sortie *c* résultant de la mise en œuvre de l'opération effectuée entre la matrice creuse *A* et un vecteur d'entrée *b.* Au cours d'une opération SpMV, la matrice *A* est parcourue et les valeurs du vecteur de sortie c sont mises à jour par les réductions réalisées. La mémoire cache 106 est ici adaptée pour que cette opération soit mise en œuvre par un algorithme de type « outer-product ».

Les opérations de réduction réalisées à partir des valeurs présentes dans la ou les régions denses de la matrice creuse *A* engendrent des valeurs non nulles du vecteur de sortie *c* qui sont proches les unes des autres. La première région mémoire 112 de la mémoire cache 106 est bien adaptée pour traiter les opérations réalisées sur cette région dense de la matrice creuse *A,* en mettant en œuvre les opérations de réduction sur les valeurs de cette région, car il est dans ce cas judicieux de travailler avec des lignes de cache entières. Par contre, les opérations réalisées à partir des valeurs présentes dans la ou les régions éparses de la matrice creuse *A* sont avantageusement traitées, dans la deuxième région mémoire 114, individuellement et non à l'échelle de lignes de cache complètes.

Dans un exemple de réalisation, cette répartition du traitement des opérations selon la localisation dans les régions dense et éparse de la matrice creuse *A* des données utilisées, entre les première et deuxième régions mémoires 112, 114 de la mémoire cache 106, peut être adaptée en fonction des résultats des opérations réalisées. Ainsi, lorsque la densité de valeurs non nulles d'une partie de la région éparse de la matrice creuse *A* dépasse une certaine valeur seuil pouvant être choisie de manière arbitraire (par exemple en présence d'au moins 3 valeurs non nulles dans une ligne de cache de 8 valeurs), des résultats d'opérations mises en œuvre à partir des valeurs de ladite partie de la région éparse de la matrice creuse *A* peuvent être stockés par lignes de cache entières dans la première région mémoire 112 et non individuellement dans la deuxième région mémoire 114. Par exemple, si une ligne de mots de la première région mémoire 112 est peu remplie au moment d'une éviction, il est possible de déporter l'écriture des résultats de calculs initialement prévue dans la première région mémoire 112 vers la région mémoire FIFO 117 pour être ensuite évincés par la mise en œuvre d'opérations atomiques de type RMW. Cela évite de faire venir une ligne de la mémoire principale 104 dans la première région mémoire 112 pour écrire un faible nombre de valeurs non nulles.

Chaque ligne de valeurs de la première région mémoire 112 peut également comporter un champ, par exemple appelé « tag », correspondant à l'adresse de la ligne de valeurs correspondante dans la mémoire principale 104. Un tel champ peut permettre de déterminer si la ligne de valeurs est déjà présente dans la première région mémoire 112 (« hit » de cette ligne) ou si celle-ci est absente de la première région mémoire 112 (« miss » de cette ligne).

Dans la mémoire cache 106, à la réception d'une opération de réduction demandée par l'unité de calcul 102 et reçue par la mémoire cache 106, la valeur à mettre à jour peut être recherchée dans la première région mémoire 112. Si cette valeur est présente dans la première région mémoire 112 (« hit » de cette valeur), la valeur peut être accumulée dans la première région mémoire 112. Si cette valeur est absente de la première région mémoire 112 (« miss » de cette valeur), la réduction à réaliser est envoyée dans la première ou la deuxième région mémoire 112, 114, en fonction de la localisation dans la matrice creuse A de la donnée qui a permis l'obtention de ce résultat intermédiaire.

Selon une réalisation particulière, dans la première région mémoire 112, chaque ligne de valeur, ou ligne de cache, peut comporter un champ, par exemple appelé « state », indiquant l'état de la ligne de valeurs, cet état pouvant correspondre à l'un des quatre états possibles suivants :
- NOV : Etat non valide, indiquant une ligne de cache libre ;
- VNU : Etat valide mais non mis à jour, indiquant que les valeurs de la ligne de cache ne sont pas cohérentes avec celles présentes dans la mémoire principale 104 ;
- VIP : Etat valide mais mise à jour en cours, indiquant que les valeurs de la ligne de cache ne sont pas cohérentes avec celles de la mémoire principale 104 mais que la mise à jour de cette ligne de cache est en cours ;
- VUP : Etat valide et à jour, indiquant que les valeurs de la ligne de cache sont cohérentes avec celles de la mémoire principale 104 (ce qui signifie que lors d'une écriture (évincement), la ligne de cache pourrait écraser la ligne dans la mémoire principale 104 sans perte de données).

Selon un exemple de réalisation, dans un état initial, toutes les lignes de la première région mémoire 112 sont dans l'état NOV. Dès qu'une ligne est allouée, suite à une réduction demandée, les valeurs de cette ligne sont mises à zéro, puis la valeur de la réduction est stockée au bon emplacement au sein de cette ligne. A ce stade, le contenu de la ligne contient cette nouvelle mise à jour mais n'est pas cohérente avec le contenu de la mémoire principale 104. La ligne est alors à l'état VNU. La mémoire cache 106 peut être configurée pour chercher ensuite les valeurs correspondantes de la ligne dans la mémoire principale 104 pour rendre la ligne cohérente. Quand la demande de lecture de la mémoire principale 104 est envoyée, la ligne passe de l'état VNU à l'état VIP. Quand les données lues sont envoyées de la mémoire principale 104 à la première région mémoire 112, le contenu de la ligne de la première région mémoire 112 est mis à jour en accumulant la ligne de la première région mémoire 112 avec la ligne correspondante de la mémoire principale 104, et la ligne passe dans l'état VUP.

Quand une ligne est dans l'état VUP, elle peut être évincée, et l'éviction peut être réalisée en commandant une écriture de la ligne concernée vers la mémoire principale 104. Une telle éviction n'est pas bloquante pour la mémoire cache 106 car dès que l'écriture de la ligne à évincer est envoyée vers la mémoire principale 104, la ligne concernée dans la première région mémoire 112 peut être réutilisée pour une autre adresse. En outre, étant donné que l'éviction peut être réalisée rapidement, l'unité de calcul 102 n'est pas bloquée en attendant que la ligne soit libérée dans la mémoire cache 106. Une gestion pertinente de l'état des lignes de valeurs dans la première région mémoire 112 peut consister à les passer à l'état VUP dès que possible.

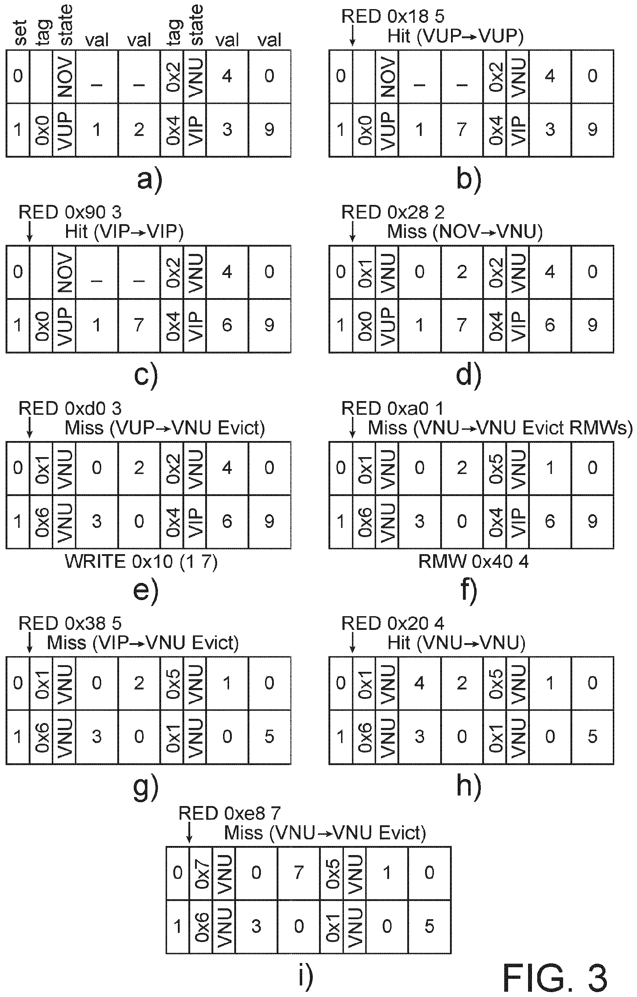

La figure 3 représente des exemples d'opérations de réduction réalisées dans des lignes de valeurs de la première région mémoire 112. Ces opérations de réduction sont mises en œuvre séquentiellement dans le temps, depuis la configuration a) jusqu'à la configuration i). Ces exemples permettent d'illustrer les possibilités de transition d'états des lignes de valeurs en fonction des comportements de la première région mémoire 112 (« hit », « miss », et « miss et éviction »). Pour chacune de ces configurations, l'opération de réduction réalisée est indiquée sur la figure 3 sous la forme « RED adresse valeur ».

La configuration a) représente l'état initial de la première région mémoire 112 qui, dans cet exemple, forme un cache à 2 ensembles (« set », de valeur 0 ou 1 dans cet exemple), 2 voies (soit 2 lignes de valeurs par ensemble, soit un total de 4 lignes de valeurs), chaque ligne de valeurs ayant une taille de 2 mots. Chaque ligne de valeurs possède un champ « tag » qui permet de connaitre l'adresse de la ligne correspondante dans la mémoire principale 104 et donc déterminer si la ligne de valeurs demandée est déjà présente ou non dans la première région mémoire 112. De plus, chaque ligne de valeurs comporte un champ « state » indiquant l'état de la ligne (correspondant à l'un des quatre états « NOV », « VNU », « VIP » et « VUP » précédemment décrits). Pour chacune des configurations b) à i), l'opération de réduction réalisée est indiquée au-dessus du tableau de valeurs des lignes de cache.

A la configuration b), la donnée concernée par l'opération de réduction réalisée (à l'adresse « 0x18 » dans cet exemple) est présente dans la première région mémoire 112 (« hit ») et il n'est pas nécessaire d'allouer une nouvelle ligne ou de faire une éviction. La donnée est simplement accumulée avec celle présente dans la ligne concernée (la valeur « 2 » passe à la valeur « 7 ») et l'état « VUP » de cette ligne n'est pas modifié.

A la configuration c), la donnée concernée par l'opération de réduction réalisée est présente dans la première région mémoire 112 (« hit ») et là encore, il n'est pas nécessaire d'allouer une nouvelle ligne ou de faire une éviction. La donnée est simplement accumulée avec celle présente dans la ligne concernée (la valeur « 3 » passe à la valeur « 6 ») et l'état « VIP » de cette ligne n'est pas modifié.

A la configuration d), un « miss » survient étant donné qu'aucune valeur de champ « tag » ne correspond à l'adresse de l'opération de réduction. La seule ligne se trouvant dans l'état « NOV » est allouée pour cette opération et la valeur de l'opération de réduction y est insérée. L'état de la ligne de valeurs modifiée passe de « NOV » à « VNU ». Ce cas n'est pas bloquant pour les opérations suivantes.

La configuration e) est similaire à la configuration d) (survenue d'un « miss »), avec toutefois pour différence qu'aucune ligne de la première région mémoire 112 n'est libre, c'est-à-dire à l'état « NOV ». Une éviction d'une des lignes de la première région mémoire 112 est réalisée. Comme l'une d'entre elles est dans l'état « VUP », elle est choisie en priorité pour cette éviction et une écriture de cette ligne dans la mémoire principale 104 (écrite sous la forme « WRITE adresse valeur » sur la figure 3) est réalisée avant l'écriture dans la première région mémoire 112. Cette opération n'est pas bloquante pour les opérations suivantes. La ligne écrite dans la première région mémoire 112 est mise à l'état « VNU ».

La configuration f) est similaire à la configuration e) mais cette fois-ci, une ligne dans l'état VNU qui contient peu d'éléments est choisie. L'éviction est effectuée avec la mise en œuvre d'opérations atomiques de type RMW sur des éléments individuels de la ligne et non sur la ligne entière. Cette opération n'est pas bloquante car elle n'intervient que lorsque la région mémoire FIFO 117 traitant les opérations de type RMW n'est pas pleine.

La configuration g) correspond à la survenue d'un « miss ». En l'absence de ligne à l'état « VUP », une des lignes à l'état « VIP » est choisie pour la mise en œuvre d'une éviction. Dans cette configuration, une opération de lecture de la mémoire principale pour la ligne concernée par l'éviction est en cours. Ainsi, avant de réaliser l'écriture dans la première région mémoire 112, la mémoire cache 106 est par exemple configurée pour attendre la réponse à cette opération de lecture, réaliser ensuite l'opération de réduction et ensuite l'opération d'écriture dans la mémoire principale 104. Cette opération correspond à un cas bloquant du fait que la mémoire cache 106 doit attendre la fin de l'éviction avant de réaliser son opération d'écriture.

A la configuration h), la donnée concernée par l'opération de réduction réalisée est présente dans la première région mémoire 112 (« hit ») et il n'est pas nécessaire d'allouer une nouvelle ligne ou de faire une éviction. La donnée est simplement accumulée avec celle présente dans la ligne concernée et l'état « VNU » de cette ligne n'est pas modifié.

La configuration i) correspond à la survenue d'un « miss ». En l'absence de ligne à l'état « VUP » ou « VIP, une des lignes à l'état « VNU » est choisie pour la mise en œuvre d'une éviction. Dans cette configuration, une opération de lecture de la mémoire principale pour la ligne concernée par l'éviction est donc initiée. L'opération de réduction et l'opération d'écriture dans la mémoire principale 104 sont ensuite mises en œuvre. Cette opération correspond à un cas bloquant du fait que la mémoire cache 106 doit initier et attendre la fin de l'éviction avant de réaliser son opération d'écriture.

La structure de la deuxième région mémoire 114 est similaire à celle d'un tableau de valeurs, par exemple de 8 octets chacune, qui peut être complètement associative, c'est-à-dire dont chaque valeur est accessible individuellement. Une mémoire CAM (« Content-Addressable Memory » en anglais) est un moyen possible de réaliser une recherche dans une telle structure de mémoire. Chaque partie de la deuxième région mémoire 114 destinée à mémoriser une valeur peut comporter un bit d'état appelé « dirty bit » et permettant de savoir si cette partie est libre ou non, et peut avoir la capacité d'effectuer des « hit », « miss » et « miss et éviction » comme la première région mémoire 112. Pour communiquer avec la mémoire principale 104, la deuxième région mémoire 114 peut ne mettre en œuvre que des opérations atomiques de type RMW sur une valeur et son adresse. Lors d'une éviction, la valeur et l'adresse sont envoyées dans la région mémoire FIFO 117 qui lance dès que possible les opérations RMW atomiques.

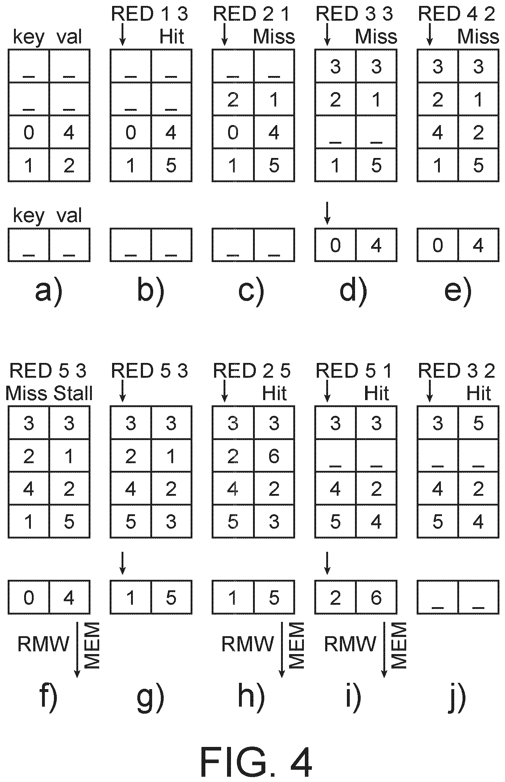

La figure 4 représente des exemples d'opérations de réduction réalisées dans la deuxième région mémoire 114. Ces opérations de réduction sont mises en œuvre séquentiellement dans le temps, depuis la configuration a) jusqu'à la configuration j). Ces exemples permettent d'illustrer les possibilités de transition d'états des différentes valeurs en fonction des comportements de la deuxième région mémoire 114 (« hit », « miss », et « miss et éviction »). Pour chacune de ces configurations, l'opération de réduction réalisée est indiquée sur la figure 3 sous la forme « RED adresse valeur ».

La configuration a) représente l'état initial de la deuxième région mémoire 114 qui, dans cet exemple, forme un cache de 4 mots. Un champ clé/adresse (« key » sur la figure 4) est associé à chaque mot. En outre, dans cet exemple, la deuxième région mémoire 114 est associée à la région mémoire FIFO 117 dont la taille est de 1 mot et qui est représentée sous la deuxième région mémoire 114. Un seuil de capacité de stockage appelé α_{region114_pleine} à partir duquel la deuxième région mémoire 114 est considérée comme trop pleine pour mettre en œuvre une opération de réduction est par exemple choisi comme étant égal à 3.

La configuration b) correspond à une opération de réduction où se produit un « hit », la valeur reçue étant accumulée dans la deuxième région mémoire 114 sans sollicitation de la région mémoire FIFO 117.

La configuration c) correspond à une opération de réduction où se produit un « miss » quand la deuxième région mémoire 114 n'est pas considérée comme trop pleine (quantité de valeurs stockées ne dépassant pas la valeur du seuil de capacité de stockage), la valeur reçue étant alors insérée dans une partie libre de la deuxième région mémoire 114.

La configuration d) correspond à une opération de réduction où se produit un « miss » et où la deuxième région mémoire 114 devient trop pleine (nb valeurs stockées > α_{région114_pleine}). Une éviction anticipée est donc réalisée pour maintenir le remplissage de la deuxième région mémoire 114 en dessous de la valeur du seuil α_{région114_pleine}. La région mémoire FIFO 117 reçoit la valeur à évincer.

La configuration e) correspond à une opération de réduction où se produit un « miss ». La valeur reçue est écrite dans la deuxième région mémoire 114 sans réaliser d'éviction car la région mémoire FIFO 117 est pleine.

Les configurations f) et g) illustrent des cas bloquants où la deuxième région mémoire 114 doit attendre (correspondant à l'indication « Miss Stall » sur la figure 4) que la région mémoire FIFO 117 se vide par exemple d'au moins une valeur (opération symbolisée par l'indication « RMW MEM » sur la figure 4) pour effectuer la nouvelle réduction qui vient d'arriver.

Enfin, les configurations h), i) et j) illustrent des situations où des « hits » se produisent, permettant le rétablissement de la quantité de valeurs stockées dans la deuxième région mémoire 114 sous le seuil de remplissage α_{région114_pleine} via la mise en œuvre d'éviction de valeurs stockées dans la deuxième région mémoire 114 et le transfert de la valeur stockée dans la région mémoire FIFO 117 vers la mémoire principale 104.

L'exemple décrit en lien avec la figure 4 illustre l'intérêt d'anticiper les évictions à réaliser depuis la deuxième région mémoire 114 quand celle-ci se remplit pour éviter l'apparition de cas bloquant grâce à l'utilisation du seuil de capacité de stockage α_{région114_pleine}.

Un autre aspect du dispositif 100 concerne la gestion de la congestion des accès à la mémoire principale 104. En effet, lors du fonctionnement du dispositif 100, les accès vers la mémoire principale 104 ne sont pas répartis uniformément dans le temps et il existe des moments où la mémoire principale 104 est peu sollicitée et d'autres où le nombre d'accès à la mémoire principale 104 est très important.

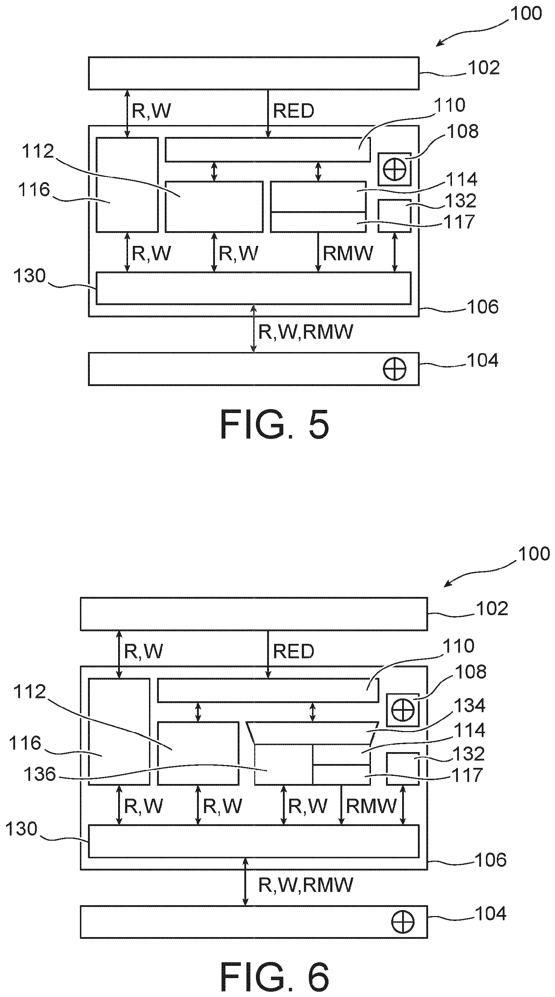

Pour permettre une gestion de la congestion de la mémoire principale 104, le dispositif 100 selon un deuxième mode de réalisation et représenté par exemple sur la figure 5 peut comporter une mémoire cache 106 dotée d'un bloc d'interface 130 configuré pour déterminer la taille (par exemple en octets) de chacun des échanges depuis et vers la mémoire principale 104. De plus, pour déterminer l'état de sollicitation de la mémoire principale 104, le bloc d'interface 130 est couplé à un circuit 132 mettant en œuvre un algorithme de type « leaky-bucket », ou seau percé. A chaque unité de temps, par exemple à chaque coup d'horloge, le circuit 132 peut recevoir un jeton qui correspond à la bande-passante mémoire réellement disponible entre la mémoire cache 106 et la mémoire principale 104. Par exemple, si l'interface mémoire a une bande passante de 100 Gbit/sec et la période de l'horloge est de 1 ns, alors, à chaque coup d'horloge, le circuit 132 peut recevoir un jeton qui correspond à 100 bits.

A chaque fois que la mémoire cache 106 envoie ou reçoit une donnée à la mémoire principale 104, depuis ou vers n'importe quelle région mémoire 112, 114 ou 116, le nombre de bits qui correspond à cet accès mémoire peut être compté par le circuit 132. Le circuit 132 peut aussi avoir un niveau de remplissage maximal, et le nombre de jetons plafonne à cette valeur. Grâce à l'état du circuit 132, les contrôleurs de chacune des régions mémoire 112, 114 et 116 peuvent savoir s'il y a de la bande passante mémoire disponible. Ainsi, les régions mémoires 112, 114 peuvent être configurées pour anticiper leurs accès et les envoyer au bon moment, c'est-à-dire lorsque la mémoire principale 104 est peu sollicitée, et ainsi éviter de créer des congestions de la mémoire principale 104.

D'autres variantes de réalisation du bloc d'interface 130 et/ou du circuit 132 permettant de limiter la congestion des accès depuis / vers la mémoire principale 104 sont possibles.

Selon une réalisation particulière, la mémoire cache 106 peut être configurée pour définir, lors d'une mise à jour d'une ligne de la première région mémoire 112, un instant auquel une demande de lecture de la mémoire principale 104 est envoyée. En effet, dans la première région mémoire 112, le passage d'une ligne de l'état « VNU » à l'état « VIP » implique l'envoi d'une requête de lecture vers la mémoire principale 104. Une contribution à l'optimisation des accès à la mémoire principale 104 peut consister à choisir quand effectuer cette lecture. Elle peut être lancée dès que la ligne de cache passe de l'état « NOV » à l'état « VNU », ou bien plus tard lorsque la ligne doit être évincée de la première région mémoire 112. En choisissant les moments auxquels sont lancées les lectures pour passer de l'état « VNU » à l'état « VIP » des lignes de la première région mémoire 112, en fonction de l'état du circuit 132, il est possible de réaliser ces lectures au bon moment, c'est-à-dire quand la mémoire principale 104 n'est pas trop sollicitée. Dans cette configuration, la première région mémoire 112 est donc configurée pour synchroniser des envois de requête de lecture à la mémoire principale 104 en fonction d'une valeur de la variable représentative de la bande passante d'accès à la mémoire principale 104. Ainsi, la mémoire cache 106 peut limiter les accès mémoire simultanés, et réduire la latence moyenne d'accès vers la mémoire principale 104.

De manière alternative ou complémentaire à la configuration ci-dessus, il est possible que la deuxième région mémoire 114 et le bloc d'interface 130 soient configurés de manière à réaliser des accès à la mémoire principale 104 en fonction de l'état du circuit 132. Par exemple, quand la deuxième région mémoire 114 n'est pas très pleine, par exemple avec un nombre de valeurs stockées inférieur à un seuil α_{région114}, le bloc d'interface 130 et la deuxième région mémoire 114 peuvent être configurés tels qu'ils ne lancent pas de requête d'accès à la mémoire principale 104. Quand la deuxième région mémoire 114 commence à être un peu plus pleine, par exemple avec un nombre de valeurs stockées compris entre le seuil α_{région114} et le seuil de capacité de stockage α_{région114_pleine} précédemment décrit, la deuxième région mémoire 114 et le bloc d'interface 130 peuvent être configurés pour mettre en œuvre des évictions de données stockées dans la deuxième région mémoire 114, à condition que la mémoire principale 104 ne soit pas trop sollicitée, c'est-à-dire en fonction de l'état du circuit 132. Les évictions peuvent être déclenchées par le bloc d'interface 130. Si la deuxième région mémoire 114 est presque pleine, par exemple avec un nombre de valeurs stockées supérieur au seuil de capacité de stockage α_{région114_pleine}, la deuxième région mémoire 114 réalise des évictions de données vers la mémoire principale 104, sauf si la région mémoire FIFO 117 est déjà pleine, comme cela a été précédemment décrit. Ce système de seuils progressifs, qui prend également en compte la charge de la mémoire principale 104 via l'état du circuit 132, permet d'éviter une congestion de la mémoire principale 104 qui serait due à la deuxième région mémoire 114.

Les mises à jour des données stockées dans la deuxième région mémoire 114 portent sur des adresses en mémoire qui sont spatialement isolées les unes des autres. Il n'est donc pas efficace, dans cette deuxième région mémoire 114, de faire venir une ligne de cache entière de la mémoire principale 104 pour mettre à jour un seul mot. Ainsi, dans une configuration particulière du dispositif 100, ces mises à jour peuvent être déportées à un contrôleur de cache plus proche de la mémoire principale 104, par exemple dans une mémoire cache L2 ou L3 lorsque la mémoire cache 106 forme une mémoire cache L1, ou bien déportées dans la mémoire principale 104. Autrement dit, la deuxième région mémoire 114 peut être configurée telle que si la mise en œuvre d'une opération par le circuit de calcul 108 implique une éviction de données mémorisées dans la deuxième région mémoire 114, ladite opération est mise en œuvre dans la mémoire principale 104 ou dans une autre mémoire cache interposée entre la mémoire cache 106 et la mémoire principale 104. Une telle configuration évite de faire venir une ligne de cache depuis la mémoire principale 104 jusqu'à la mémoire cache 106 pour ne modifier qu'une seule valeur, par exemple un seul mot. Cette configuration permet de réduire le trafic de données entre la mémoire principale 104 et la mémoire cache 106, évite également d'avoir des lignes de caches qui sont peu denses, et permet en outre de profiter de la granularité d'accès de la mémoire principale 104 qui est souvent plus petite qu'une ligne de cache. Il est notamment possible de trouver un équilibre dans un tel déport des opérations de mise à jour des données afin de ne pas saturer la puissance de calcul de l'élément mémoire dans lequel les mises à jour sont déportées.

La figure 6 représente schématiquement le dispositif 100 selon un troisième mode de réalisation.

Pour que la première région mémoire 112 soit efficace, il est préférable que la région du vecteur de sortie c qui est stockée dans cette première région mémoire 112 ne dépasse pas la hauteur de la bande de la matrice creuse A correspondant à la région dense de cette matrice (en considérant une hauteur de bande telle que représentée sur la figure 2). Si la région du vecteur de sortie c stockée dans la première région mémoire 112 dépasse cette taille, pendant le parcours d'une colonne de la matrice creuse A, toutes les données de la première région mémoire 112 pourraient être évincées, ce qui ne permettrait pas de réduire les accès vers la mémoire principale 104. Or, la taille, ou la capacité mémoire, de la première région mémoire 112 est limitée. Donc, si la largeur de la bande de la matrice correspondant à la région dense est trop grande, cette contrainte ne peut être respectée. Le dispositif 100 selon le troisième mode de réalisation propose de définir la largeur de la bande, et donc de définir les limites entre les régions dense et éparses de la matrice creuse, en fonction de la taille de la première région mémoire 112, afin de respecter cette contrainte (cette configuration étant réalisable également pour les modes de réalisation précédemment décrits). Il est donc possible qu'il reste des parties de la ou des régions denses de la matrice creuse A qui ne soient pas prises en compte par la première région mémoire 112.

Ce problème peut être au moins partiellement résolu en dotant la mémoire cache 106 d'un bloc mémoire tampon 134 appelé « coalescing buffer », ou CB, qui correspond à une mémoire tampon dont la taille est égale à celle d'une ligne de cache et dont la fonction est de traiter des réductions qui ne peuvent pas être traitées par la première région mémoire 112. Si des réductions consécutives tombent dans une même ligne de valeurs, le bloc mémoire tampon 134 les fusionne. Ensuite, quand arrive une réduction dont l'adresse n'est pas celle de la ligne de valeurs stockée dans le bloc mémoire tampon 134, la ligne de valeurs stockée dans le bloc mémoire tampon 134 est transférée soit dans la deuxième région mémoire 114 si elle contient peu de réductions, soit dans une quatrième région mémoire 136 dans le cas contraire. Le fonctionnement, en termes d'associativité, de cette quatrième région mémoire 136 est similaire à celui de la première région mémoire 112 (avec toutefois un nombre de voies pouvant être différent), sa taille, ou capacité mémoire, étant toutefois inférieure à celle de la première région mémoire 112. Cette quatrième région mémoire 136 est configurée pour traiter des données des régions denses qui ne sont pas dans la bande principale dense mais entre cette bande principale dense et les régions éparses de la matrice creuse *A.* La gestion de cette quatrième région mémoire 136, qui possède une plus faible capacité mémoire que celle de la première région mémoire 112, requiert la mise en œuvre d'accès vers la mémoire principale 104 pour mettre à jour les lignes de valeurs puis les évincer.

Le dispositif 100 selon le troisième mode de réalisation a pour avantage de protéger les données stockées dans la première région mémoire 112. La première région mémoire 112 permet de toujours garder en cache les éléments de la région la plus dense de la matrice, sans que ceux-ci soient perturbés par les autres accès. De plus, la quatrième région mémoire 136 permet de capter la localité spatiale locale pour les régions denses qui ne tiennent pas dans la première région mémoire 112, tout en la protégeant. Comme la quatrième région mémoire 136 est de petite taille, en passant d'une colonne à la suivante, ses données seront évincées.

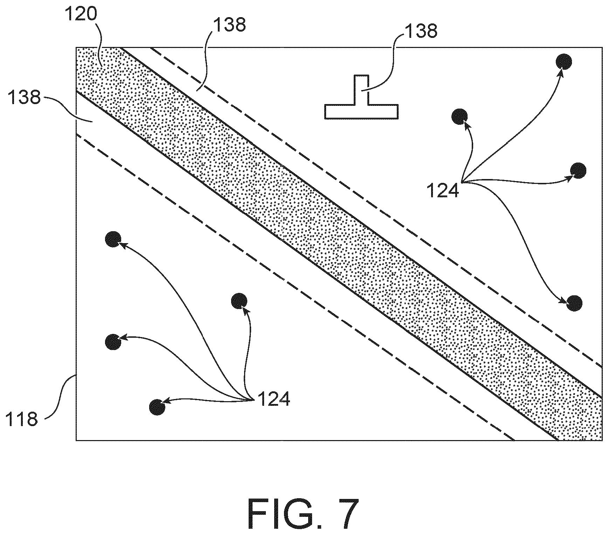

La figure 7 représente schématiquement la matrice creuse 118 utilisée lors de calculs mise en œuvre par le dispositif 100 selon le troisième mode de réalisation. Comme dans les premier et deuxième modes de réalisation, les données 120 de la région dense de la matrice 118 sont destinées à être traitées dans la première région mémoire 112 de la mémoire cache 106, et les données 124 des régions éparses de la matrice 118 sont destinées à être traitées dans la deuxième région mémoire 114 de la mémoire cache 106. En outre, la référence 138 désigne des données se trouvant dans des régions denses de la matrice 118 localisées entre la région dense des données 120 et les régions éparses de la matrice 118, ainsi que des données denses localisées au sein des régions éparses de la matrice 118.

Dans les différents modes de réalisation, la taille, ou capacité mémoire, des différentes régions mémoires de la mémoire cache 106 peut dépendre notamment de la matrice creuse *A* à partir de laquelle les calculs sont réalisés.

Selon une première configuration, les tailles de ces différentes régions peuvent être définies de manière statique avant de lancer les calculs matriciels, et par exemple calculées par logiciel en analysant la matrice creuse *A.*

Selon une deuxième configuration, les tailles de ces différentes régions peuvent être définies de manière statique et calculées de manière matérielle suite à de précédents calculs mis en œuvre à partir de la même matrice creuse. Par exemple, pendant un premier parcours de la matrice creuse *A,* la mémoire cache 106 peut extraire des paramètres statistiques de la matrice creuse *A* puis, avant de lancer le parcours suivant de la matrice creuse *A,* les tailles des différentes régions mémoires de la mémoire cache 106 peuvent être redéfinies en fonction des paramètres statistiques précédemment extraits.

Selon une troisième configuration, les tailles des différentes régions mémoires de la mémoire cache 106 peuvent être définies de manière dynamique et calculées de manière matérielle. Par exemple, la mémoire cache 106 peut analyser, au cours d'un calcul matriciel, les échanges de données réalisés par chacune des régions mémoires, et ajuster la taille des régions mémoires à la volée afin d'équilibrer le niveau de trafic des différentes régions mémoires de la mémoire cache 106.

Le dispositif 100 peut comporter une unité de calcul 102 de type mono-cœur ou de type multi-cœur. Dans le cas d'un système multi-cœur, le dispositif 100 peut comporter plusieurs mémoires cache 106 fonctionnant en parallèle les unes des autres et couplées à une même mémoire principale 104.

Ainsi, dans tous les modes de réalisations et exemples précédemment décrits, la mémoire cache 106 forme un cache de données proche processeur (généralement appelé « L1 data cache » en anglais) qui permet, grâce au circuit de calcul 108, de faire des réductions au sein même de la mémoire cache 106 et qui est bien adaptée à la séquence d'accès qui est typique de l'exécution des opérations SpMV sur une matrice creuse avec une région dense agencée en diagonale de la matrice. Une telle configuration de la mémoire cache 106 permet à l'unité de calcul 102 de ne pas être bloquée dans un état d'attente de données provenant de la mémoire principale 104 étant donné que les opérations de réductions sont mises en œuvre au sein même de la mémoire cache 106. En outre, le dispositif 100 ainsi proposé peut permettre de minimiser les résultats de type « miss » lors de la mise en œuvre d'opérations de réduction, et minimiser également les accès vers la mémoire principale 104.

Dans les différents modes et exemples de réalisation précédemment décrits, la mémoire cache 106 comporte au moins une région optimisée pour stocker des données denses et au moins une autre région optimisée pour stocker des données éparses. En outre, la mémoire cache 106 peut exploiter la structure d'une matrice creuse pour envoyer les données vers la région mémoire appropriée à la région des données. En outre, la mémoire cache 106 peut être apte à déplacer des données de la région mémoire pour données éparses, vers la région mémoire pour données denses, si la densité augmente, et inversement. En outre, la mémoire cache 106 peut contenir plusieurs régions mémoires dont les règles de fonctionnement empêchent une duplication d'adresses entre les régions. En outre, la mémoire cache 106 peut anticiper des évictions de données afin d'éviter une congestion de la mémoire principale 104. En outre, la mémoire cache 106 peut être configurée pour déporter les opérations de réduction au plus proche de la mémoire principale 104.

Le dispositif 100 permet d'utiliser la même unité de calcul pour des régions de la matrice de différentes densités, et la mémoire cache 106 est adaptée au type de données traitées.

En outre, la mémoire cache 106 ainsi proposée peut permettre une accélération du traitement des matrices creuses, une réduction du nombre d'accès vers la mémoire principale 104, ainsi qu'une meilleure utilisation du système de mémoire en évitant les rafales d'accès vers la mémoire principale 104.

Dans les exemples de réalisation décrits, seule la mémoire cache 106 est interposée entre l'unité de calcul 102 et la mémoire principale 104. En variante des différents exemples de réalisation précédemment décrits, le dispositif 100 peut comporter une ou plusieurs autres mémoires caches (L2, L3, etc.) interposées par exemple entre la mémoire cache 106 et la mémoire principale 104.

Dans une réalisation particulière, la mémoire cache 106 peut former un cache de données pour un processeur générique correspondant à l'unité de calcul 102, et qui permet d'accélérer les algorithmes de calculs matriciels mis en œuvre par le processeur. Selon une autre réalisation particulière, la mémoire cache 106 peut correspondre à un élément intégré dans un accélérateur dédié aux calculs d'opérations SpMV et/ou SpMSpM par algorithme de type « outer-product ». Dans le cas d'une mise en œuvre d'opérations de type SpMSpM, le dispositif 100 peut permettre d'accélérer un algorithme de type Gustavson mis en œuvre pour de telles opérations.

Le dispositif 100 peut correspondre notamment à un dispositif de calcul haute performance, ou HPC.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Dispositif de calcul informatique (100), comprenant au moins :
- une unité de calcul (102) ;
- une mémoire principale (104) ;
- une mémoire cache (106) configurée pour échanger des données avec l'unité de calcul (102) et avec la mémoire principale (104), et comprenant un circuit de calcul (108) configuré pour réaliser des opérations de réduction entre des produits partiels issus de valeurs d'au moins une matrice creuse (118) et d'au moins un vecteur d'entrée, et au moins un vecteur de sortie ;
dans lequel la mémoire cache (106) comporte au moins une première région mémoire (112) associative à N voies configurée pour mémoriser, avec une première granularité de mots T_{D}, des valeurs de résultats d'opérations de réduction réalisées par le circuit de calcul (108) à partir de produits partiels issus de valeurs d'au moins une région dense (120) de la matrice creuse (118), et au moins une deuxième région mémoire (114) complètement associative ou associative à M voies configurée pour mémoriser, avec une deuxième granularité de mots T_{S}, des valeurs de résultats d'opérations de réduction réalisées par le circuit de calcul (108) à partir de produits partiels issus de valeurs d'au moins une région éparse (124) de la matrice creuse (118), avec M, N, T_{D} et T_{S} correspondant à des entiers tels que M ≥ N, T_{D} ≥ T_{S}, et également tels que M > N si T_{D} = T_{S} et tels que T_{D} > T_{S} si M = N, et dans lequel chacune des première et deuxième granularités de mots T_{D}, T_{S} correspond à une taille d'une ligne de cache.

2. Dispositif de calcul informatique (100) selon la revendication 1, dans lequel la mémoire cache (106) comporte une interface (110) couplée à l'unité de calcul (102) et configurée pour recevoir des opérations de réduction requises par l'unité de calcul (102) et destinées à être mises en œuvre par le circuit de calcul (108), et pour envoyer des données correspondantes dans la première région mémoire (112) lorsque les produits partiels des opérations de réduction sont issus de valeurs de la région dense (120) de la matrice creuse (118) ou dans la deuxième région mémoire (114) lorsque les produits partiels des opérations de réduction sont issus de valeurs de la région éparse (124) de la matrice creuse (118).

3. Dispositif de calcul informatique (100) selon l'une quelconque des revendications précédentes, dans lequel la mémoire principale (104) et la mémoire cache (106) sont configurées telles que des échanges entre la mémoire principale (104) et la première région mémoire (112) correspondent à des opérations de lecture et d'écriture, et/ou dans lequel des échanges entre la mémoire principale (104) et la deuxième région mémoire (114) correspondent à des opérations atomiques de type RMW.

4. Dispositif de calcul informatique (100) selon l'une quelconque des revendications précédentes, dans lequel la mémoire cache (106) comporte en outre au moins une troisième région mémoire (116) associative par ensemble configurée pour mémoriser des données envoyées depuis la mémoire principale (104).

5. Dispositif de calcul informatique (100) selon l'une quelconque des revendications précédentes, dans lequel la mémoire cache (106) comporte en outre au moins une région mémoire FIFO (117) configurée pour stocker temporairement des données envoyées depuis la deuxième région mémoire (114) vers la mémoire principale (104).

6. Dispositif de calcul informatique (100) selon l'une quelconque des revendications précédentes, dans lequel la deuxième région mémoire (114) est configurée telle que si la mise en œuvre d'une opération de réduction par le circuit de calcul (108) implique une éviction de données mémorisées dans la deuxième région mémoire (114), ladite opération de réduction est mise en œuvre dans la mémoire principale (104) ou dans une autre mémoire cache interposée entre la mémoire cache (106) et la mémoire principale (104).

7. Dispositif de calcul informatique (100) selon l'une quelconque des revendications précédentes, dans lequel la mémoire cache (106) est configurée pour mettre en œuvre, à la réception d'une opération de réduction demandée par l'unité de calcul (102) et dont le résultat implique une modification d'une valeur de résultat :
- recherche de la présence de la valeur de résultat dans la première région mémoire (102) ;
- mise à jour de la valeur de résultat dans la première région mémoire (112) si cette valeur est présente dans la première région mémoire (112), ou envoi de l'opération de réduction demandée par l'unité de calcul (102) dans la première région mémoire (112) ou la deuxième région mémoire (114) si cette valeur est absente de la première région mémoire (112).

8. Dispositif de calcul informatique (100) selon l'une quelconque des revendications précédentes, dans lequel la première région mémoire (112) est configurée telle que chaque ligne de valeurs stockée dans la première région mémoire (112) comporte au moins un champ d'adresse, un champ d'état de la ligne et plusieurs champs de valeurs, et/ou dans lequel la deuxième région mémoire (114) est configurée telle que chaque partie de la deuxième région mémoire (114) destinée à mémoriser une valeur comporte au moins un bit représentatif de l'état de ladite partie.

9. Dispositif de calcul informatique (100) selon l'une quelconque des revendications précédentes, dans lequel la première région mémoire (112) est configurée pour mettre en œuvre, lors d'opérations de réduction réalisées par le circuit de calcul (108) à partir de valeurs de la région dense (120) de la matrice creuse (118) :
- allocation d'une ligne de valeurs nulles de la première région mémoire (112) lors d'un accès à une adresse absente de la mémoire cache (106) ;
- écriture de résultats desdites opérations de réduction dans ladite ligne de la première région mémoire (112) ;
- lorsque ladite ligne de la première région mémoire (112) est sélectionnée pour être évincée, lecture de valeurs stockées dans la mémoire principale (104) et combinaison, dans ladite ligne de la première région mémoire (112), des valeurs lues dans la mémoire principale (104) avec celles écrites dans ladite ligne de la première région mémoire (112) ;
- éviction de ladite ligne de la première région mémoire (112), comprenant une écriture des valeurs de ladite ligne de la première région mémoire (112) dans la mémoire principale (104).

10. Dispositif de calcul informatique (100) selon l'une quelconque des revendications précédentes, dans lequel la mémoire cache (106) est configurée telle que lorsque la densité de valeurs non nulles d'une partie de la région éparse (124) de la matrice creuse (118) est supérieure à une première valeur seuil, des résultats d'opérations de réduction mises en œuvre à partir des valeurs de ladite partie de la région éparse (124) de la matrice creuse (118) sont stockés dans la première région mémoire (112).

11. Dispositif de calcul informatique (100) selon l'une quelconque des revendications précédentes, dans lequel la deuxième région mémoire (114) est configurée pour mettre en œuvre une éviction d'au moins une des valeurs stockées dans la deuxième région mémoire (114) vers la mémoire principale (104) lorsque le nombre de valeurs stockées dans la deuxième région mémoire (114) dépasse un seuil de capacité de stockage prédéfini.

12. Dispositif de calcul informatique (100) selon l'une quelconque des revendications précédentes, dans lequel la mémoire cache (106) comporte en outre un bloc d'interface (130) configuré pour déterminer la taille de chacun des échanges depuis et vers la mémoire principale (104) et un circuit (132) de mise en œuvre d'un algorithme de type seau percé délivrant au moins une variable représentative d'une bande passante d'accès à la mémoire principale (104).

13. Dispositif de calcul informatique (100) selon la revendication 12, dans lequel la première région mémoire (112) est configurée pour synchroniser des envois de requête de lecture à la mémoire principale (104) en fonction d'une valeur de la variable représentative de la bande passante d'accès à la mémoire principale (104), et/ou dans lequel la deuxième région mémoire (114) et le bloc d'interface (130) sont configurés pour mettre en œuvre des évictions de valeurs stockées dans la deuxième région mémoire (114) vers la mémoire principale (104) en fonction d'un nombre de valeurs stockées dans la deuxième région mémoire (114) et d'une valeur de la variable représentative de la bande passante d'accès à la mémoire principale (104).

14. Dispositif de calcul informatique (100) selon l'une quelconque des revendications précédentes, dans lequel la mémoire cache (106) comporte en outre une quatrième région mémoire (136) associative à plusieurs voies de taille inférieure à celle de la première région mémoire (112), et un bloc mémoire tampon (134) configuré pour stocker temporairement des valeurs de résultats d'opérations de réduction réalisées par le circuit de calcul (108) à partir de produits partiels issus de valeurs d'au moins une deuxième région dense (138) de la matrice creuse (118) localisée et pour transférer lesdites valeurs dans la deuxième région mémoire (114) ou dans la quatrième région mémoire (136).

15. Dispositif de calcul informatique (100) selon l'une quelconque des revendications précédentes, dans lequel les tailles des régions mémoires (112, 114, 116, 136) de la mémoire cache (106) sont définies en fonction de caractéristiques de la matrice creuse (118).

## Patentansprüche

1. Eine Rechen-Einrichtung (100), die wenigstens Folgendes aufweist:
eine Recheneinheit (102);
einen Hauptspeicher (104);
einen Cache-Speicher (106), der eingerichtet ist zum Austauschen von Daten mit der Recheneinheit (102) und mit dem Hauptspeicher (104), und der eine Rechenschaltung (108) aufweist, die eingerichtet ist zum Durchführen von Reduktionsoperationen zwischen Teilprodukten, die von Werten wenigstens einer dünnbesetzten Matrix (118) und wenigstens eines Eingangsvektors abgeleitet sind, und wenigstens eines Ausgangsvektors;
wobei der Cache-Speicher (106) wenigstens einen ersten N-fach satzassoziativen Speicherbereich (112) aufweist, der eingerichtet ist zum Speichern, mit einer ersten Wortgranularität T_{D}, von Werten von Ergebnissen von Reduktionsoperationen, die von der Rechenschaltung (108) basierend auf Teilprodukten durchgeführt werden, die von Werten wenigstens eines dichten Bereichs (120) der dünnbesetzten Matrix (118) abgeleitet sind, und wenigstens einen zweiten vollständig assoziativen oder M-fach satzassoziativen Speicherbereich (114), der eingerichtet ist zum Speichern, mit einer zweiten Wortgranularität T_{S}, von Werten von Ergebnissen von Reduktionsoperationen, die von der Rechenschaltung (108) basierend auf Teilprodukten durchgeführt werden, die von Werten wenigstens eines dünnbesetzten Bereichs (124) der dünnbesetzten Matrix (118) abgeleitet sind, wobei M, N, T_{D} und Ts ganzen Zahlen entsprechen, sodass M ≥ N, T_{D} ≥ TS, und auch sodass M > N, wenn T_{D} = T_{S}, und sodass T_{D} > T_{S}, wenn M = N, und wobei jede der ersten und zweiten Wortgranularitäten T_{D}, T_{S} einer Größe einer Cache-Zeile entspricht.

2. Rechen-Einrichtung (100) nach Anspruch 1, wobei der Cache-Speicher (106) eine Schnittstelle (110) aufweist, die mit der Recheneinheit (102) gekoppelt und eingerichtet ist zum Empfangen von Reduktionsoperationen, die von der Recheneinheit (102) angefordert werden und die von der Rechenschaltung (108) implementiert werden sollen, und zum Senden entsprechender Daten in den ersten Speicherbereich (112), wenn die Teilprodukte der Reduktionsoperationen von Werten des dichten Bereichs (120) der dünnbesetzten Matrix (118) abgeleitet sind, oder in den zweiten Speicherbereich (114), wenn die Teilprodukte der Reduktionsoperationen von Werten des dünnbesetzten Bereichs (124) der dünnbesetzten Matrix (118) abgeleitet sind.

3. Rechen-Einrichtung (100) nach einem der vorhergehenden Ansprüche, wobei der Hauptspeicher (104) und der Cache-Speicher (106) derart konfiguriert sind, dass Austausche zwischen dem Hauptspeicher (104) und dem ersten Speicherbereich (112) Lese- und Schreiboperationen entsprechen, und/oder wobei Austausche zwischen dem Hauptspeicher (104) und dem zweiten Speicherbereich (114) atomaren Operationen vom RMW-Typ entsprechen.

4. Rechen-Einrichtung (100) nach einem der vorhergehenden Ansprüche, wobei der Cache-Speicher (106) ferner wenigstens einen dritten satzassoziativen Speicherbereich (116) aufweist, der eingerichtet ist zum Speichern von Daten, die vom Hauptspeicher (104) gesendet werden.

5. Rechen-Einrichtung (100) nach einem der vorhergehenden Ansprüche, wobei der Cache-Speicher (106) ferner wenigstens einen FIFO-Speicherbereich (117) aufweist, der eingerichtet ist zum vorübergehenden Speichern von Daten, die vom zweiten Speicherbereich (114) zum Hauptspeicher (104) gesendet werden.

6. Rechen-Einrichtung (100) nach einem der vorhergehenden Ansprüche, wobei der zweite Speicherbereich (114) derart konfiguriert ist, dass wenn die Implementierung einer Reduktionsoperation durch die Rechenschaltung (108) eine Verdrängung von im zweiten Speicherbereich (114) gespeicherten Daten beinhaltet, besagte Reduktionsoperation im Hauptspeicher (104) oder in einem anderen Cache-Speicher implementiert wird, der zwischen dem Cache-Speicher (106) und dem Hauptspeicher (104) zwischengeschaltet ist.

7. Rechen-Einrichtung (100) nach einem der vorhergehenden Ansprüche, wobei der Cache-Speicher (106) eingerichtet ist zum Implementieren, beim Empfang einer von der Recheneinheit (102) angeforderten Reduktionsoperation, deren Ergebnis eine Modifikation eines Ergebniswerts beinhaltet:
- Suche nach dem Vorhandensein des Ergebniswerts im ersten Speicherbereich (102);
- Aktualisierung des Ergebniswerts im ersten Speicherbereich (112), wenn dieser Wert im ersten Speicherbereich (112) vorhanden ist, oder Senden der von der Recheneinheit (102) angeforderten Reduktionsoperation an den ersten Speicherbereich (112) oder den zweiten Speicherbereich (114), wenn dieser Wert im ersten Speicherbereich (112) nicht vorhanden ist.

8. Rechen-Einrichtung (100) nach einem der vorhergehenden Ansprüche, wobei der erste Speicherbereich (112) derart konfiguriert ist, dass jede Zeile von im ersten Speicherbereich (112) gespeicherten Werten wenigstens ein Adressfeld, ein Zeilenzustandsfeld und eine Vielzahl von Wertfeldern aufweist, und/oder wobei der zweite Speicherbereich (114) derart konfiguriert ist, dass jeder Abschnitt des zweiten Speicherbereichs (114), der zum Speichern eines Werts vorgesehen ist, wenigstens ein Bit aufweist, das den Zustand besagten Abschnitts repräsentiert.

9. Rechen-Einrichtung (100) nach einem der vorhergehenden Ansprüche, wobei der erste Speicherbereich (112) eingerichtet ist zum Implementieren, während Reduktionsoperationen, die von der Rechenschaltung (108) basierend auf Werten des dichten Bereichs (120) der dünnbesetzten Matrix (118) durchgeführt werden, von:
- Zuweisung einer Zeile von Nullwerten des ersten Speicherbereichs (112) beim Zugriff auf eine im Cache-Speicher (106) nicht vorhandene Adresse;
- Schreiben von Ergebnissen besagter Reduktionsoperationen in besagte Zeile des ersten Speicherbereichs (112);
- wenn besagte Zeile des ersten Speicherbereichs (112) zur Verdrängung ausgewählt wird, Lesen von im Hauptspeicher (104) gespeicherten Werten und Kombinieren, in besagter Zeile des ersten Speicherbereichs (112), der aus dem Hauptspeicher (104) gelesenen Werte mit den in besagte Zeile des ersten Speicherbereichs (112) geschriebenen Werten;
- Verdrängung besagter Zeile des ersten Speicherbereichs (112), umfassend ein Schreiben der Werte besagter Zeile des ersten Speicherbereichs (112) in den Hauptspeicher (104).

10. Rechen-Einrichtung (100) nach einem der vorhergehenden Ansprüche, wobei der Cache-Speicher (106) derart konfiguriert ist, dass wenn die Dichte von Nicht-Null-Werten eines Abschnitts des dünnbesetzten Bereichs (124) der dünnbesetzten Matrix (118) größer als ein erster Schwellenwert ist, Ergebnisse von Reduktionsoperationen, die basierend auf den Werten besagten Abschnitts des dünnbesetzten Bereichs (124) der dünnbesetzten Matrix (118) implementiert werden, im ersten Speicherbereich (112) gespeichert werden.

11. Rechen-Einrichtung (100) nach einem der vorhergehenden Ansprüche, wobei der zweite Speicherbereich (114) eingerichtet ist zum Implementieren einer Verdrängung wenigstens eines der im zweiten Speicherbereich (114) gespeicherten Werte zum Hauptspeicher (104) hin, wenn die Anzahl der im zweiten Speicherbereich (114) gespeicherten Werte einen vordefinierten Speicherkapazitätsschwellenwert überschreitet.

12. Rechen-Einrichtung (100) nach einem der vorhergehenden Ansprüche, wobei der Cache-Speicher (106) ferner einen Schnittstellenblock (130) aufweist, der eingerichtet ist zum Bestimmen der Größe jedes der Austausche von und zum Hauptspeicher (104), und eine Schaltung (132) zum Implementieren eines Algorithmus vom Leaky-Bucket-Typ, der wenigstens eine Variable liefert, die eine Bandbreite des Zugriffs auf den Hauptspeicher (104) repräsentiert.

13. Rechen-Einrichtung (100) nach Anspruch 12, wobei der erste Speicherbereich (112) eingerichtet ist zum Synchronisieren von Sendevorgängen von Leseanfragen an den Hauptspeicher (104) in Abhängigkeit von einem Wert der Variablen, die die Bandbreite des Zugriffs auf den Hauptspeicher (104) repräsentiert, und/oder wobei der zweite Speicherbereich (114) und der Schnittstellenblock (130) eingerichtet sind zum Implementieren von Verdrängungen von im zweiten Speicherbereich (114) gespeicherten Werten zum Hauptspeicher (104) in Abhängigkeit von einer Anzahl von im zweiten Speicherbereich (114) gespeicherten Werten und von einem Wert der Variablen, die die Bandbreite des Zugriffs auf den Hauptspeicher (104) repräsentiert.

14. Rechen-Einrichtung (100) nach einem der vorhergehenden Ansprüche, wobei der Cache-Speicher (106) ferner einen vierten mehrfach satzassoziativen Speicherbereich (136) aufweist, der eine kleinere Größe als der erste Speicherbereich (112) hat, und einen Pufferspeicherblock (134), der eingerichtet ist zum vorübergehenden Speichern von Werten von Ergebnissen von Reduktionsoperationen, die von der Rechenschaltung (108) basierend auf Teilprodukten durchgeführt werden, die von Werten wenigstens eines zweiten dichten Bereichs (138) der lokalisierten dünnbesetzten Matrix (118) abgeleitet sind, und zum Übertragen besagter Werte an den zweiten Speicherbereich (114) oder an den vierten Speicherbereich (136).

15. Rechen-Einrichtung (100) nach einem der vorhergehenden Ansprüche, wobei die Größen der Speicherbereiche (112, 114, 116, 136) des Cache-Speichers (106) in Abhängigkeit von Eigenschaften der dünnbesetzten Matrix (118) definiert sind.

## Claims

1. Computing device (100), comprising at least:
- a computing unit (102);
- a main memory (104);
- a cache memory (106) configured to exchange data with the computing unit (102) and with the main memory (104), and comprising a computing circuit (108) configured to perform reduction operations between partial products derived from values of at least one sparse matrix (118) and of at least one input vector, and at least one output vector;
wherein the cache memory (106) comprises at least a first N-way set associative memory region (112) configured to store, with a first word granularity T_{D}, values of results of reduction operations performed by the computing circuit (108) based on partial products derived from values of at least one dense region (120) of the sparse matrix (118), and at least one second fully associative or M-way set associative memory region (114) configured to store, with a second word granularity T_{S}, values of results of reduction operations performed by the computing circuit (108) based on partial products derived from values of at least one sparse region (124) of the sparse matrix (118), with M, N, T_{D}, and T_{S} corresponding to integers such that M ≥ N, T_{D} ≥ T_{S}, and also such that M > N if T_{D} = T_{S} and such that T_{D} > T_{S} if M = N, and wherein each of the first and second word granularities T_{D}, T_{S} corresponds to a size of a cache line.

2. Computing device (100) according to claim 1, wherein the cache memory (106) comprises an interface (110) coupled to the computing unit (102) and configured to receive reduction operations requested by the computing unit (102) and intended to be implemented by the computing circuit (108), and to send corresponding data into the first memory region (112) when the partial products of the reduction operations are derived from values of the dense region (120) of the sparse matrix (118), or into the second memory region (114) when the partial products of the reduction operations are derived from values of the sparse region (124) of the sparse matrix (118).

3. Computing device (100) according to any one of the foregoing claims, wherein the main memory (104) and the cache memory (106) are configured in such a way that exchanges between the main memory (104) and the first memory region (112) correspond to read and write operations, and/or wherein exchanges between the main memory (104) and the second memory region (114) correspond to RMW-type atomic operations.

4. Computing device (100) according to any one of the foregoing claims, wherein the cache memory (106) further comprises at least a third set-associative memory region (116) configured to store data sent from the main memory (104).

5. Computing device (100) according to any one of the foregoing claims, wherein the cache memory (106) further comprises at least one FIFO memory region (117) configured to temporarily store data sent from the second memory region (114) to the main memory (104).

6. Computing device (100) according to any one of the foregoing claims, wherein the second memory region (114) is configured in such a way that if the implementation of a reduction operation by the computing circuit (108) involves an eviction of data stored in the second memory region (114), said reduction operation is implemented in the main memory (104) or in another cache memory interposed between the cache memory (106) and the main memory (104).

7. Computing device (100) according to any one of the foregoing claims, wherein the cache memory (106) is configured to implement, on reception of a reduction operation requested by the computing unit (102) and the result of which involves a modification of a result value:
- search for the presence of the result value in the first memory region (102);
- update of the result value in the first memory region (112) if this value is present in the first memory region (112), or sending of the reduction operation requested by the computing unit (102) to the first memory region (112) or the second memory region (114) if this value is absent from the first memory region (112).

8. Computing device (100) according to any one of the foregoing claims, wherein the first memory region (112) is configured in such a way that each line of values stored in the first memory region (112) comprises at least one address field, one line state field, and a plurality of value fields, and/or wherein the second memory region (114) is configured in such a way that each portion of the second memory region (114) intended to store a value comprises at least one bit representative of the state of said portion.

9. Computing device (100) according to any one of the foregoing claims, wherein the first memory region (112) is configured to implement, during reduction operations performed by the computing circuit (108) based on values of the dense region (120) of the sparse matrix (118):
- allocation of a line of zero values of the first memory region (112) upon access to an address absent from the cache memory (106);
- writing of results of said reduction operations into said line of the first memory region (112);
- when said line of the first memory region (112) is selected to be evicted, reading of values stored in the main memory (104) and combination, in said line of the first memory region (112), of the values read from the main memory (104) with those written into said line of the first memory region (112);
- eviction of said line of the first memory region (112), comprising a writing of the values of said line of the first memory region (112) into the main memory (104).

10. Computing device (100) according to any one of the foregoing claims, wherein the cache memory (106) is configured in such a way that when the density of non-zero values of a portion of the sparse region (124) of the sparse matrix (118) is greater than a first threshold value, results of reduction operations implemented based on the values of said portion of the sparse region (124) of the sparse matrix (118) are stored in the first memory region (112).

11. Computing device (100) according to any one of the foregoing claims, wherein the second memory region (114) is configured to implement an eviction of at least one of the values stored in the second memory region (114) towards the main memory (104) when the number of values stored in the second memory region (114) exceeds a predefined storage capacity threshold.

12. Computing device (100) according to any one of the foregoing claims, wherein the cache memory (106) further comprises an interface block (130) configured to determine the size of each of the exchanges from and to the main memory (104) and a circuit (132) for implementing a leaky-bucket type algorithm delivering at least one variable representative of a bandwidth of access to the main memory (104).

13. Computing device (100) according to claim 12, wherein the first memory region (112) is configured to synchronize sendings of read requests to the main memory (104) as a function of a value of the variable representative of the bandwidth of access to the main memory (104), and/or wherein the second memory region (114) and the interface block (130) are configured to implement evictions of values stored in the second memory region (114) to the main memory (104) as a function of a number of values stored in the second memory region (114) and of a value of the variable representative of the bandwidth of access to the main memory (104).

14. Computing device (100) according to any one of the foregoing claims, wherein the cache memory (106) further comprises a fourth multi-way set associative memory region (136) having a size smaller than that of the first memory region (112), and a buffer memory block (134) configured to temporarily store values of results of reduction operations performed by the computing circuit (108) based on partial products derived from values of at least a second dense region (138) of the localized sparse matrix (118) and to transfer said values to the second memory region (114) or to the fourth memory region (136).

15. Computing device (100) according to any one of the foregoing claims, wherein the sizes of the memory regions (112, 114, 116, 136) of the cache memory (106) are defined as a function of characteristics of the sparse matrix (118).
